# EUROPEAN PATENT APPLICATION

(11) **EP 0 749 797 A1**
(43) Date of publication of application: **27.12.1996**
(21) Application number: 96109784.7
(22) Date of filing: 18.06.1996
(51) Int. Cl.: B23D 55/04, B23D 53/04

(54) **Plant to saw unfinished sheet metal products with movable sawing machine**

(30) Priority: 23.06.1995 IT MI951354
(71) Applicant: FRIGGI NF S.r.l., 20086 Motta Visconti, Milano (IT)
(72) Inventor: Friggi, Giovanni, 20086 Motta Visconti, Milano (IT)
(74) Representative: Faggioni, Marco, Dr. Ing.

(57) **Abstract**

The present invention concerns a plant to saw unfinished sheet metal products, which comprises at least one band sawing machine (1) movable along a guide track (2) and a plurality of transport lines consisting of feeding lines (3), to feed the products to be sawn, and of corresponding removing lines (4) to remove the sawn products, said transport lines being positioned beside the guide track (2), or preferably perpendicular thereto, and ending next to said track.

Said transport lines are preferably positioned side-by-side, in pairs, and they are formed by roller conveyors, or by containers or trolleys (5).

## Description

The present invention concerns the field of machine tools to machine unfinished sheet metal products and, more specifically, the field of sawing machines and preferably band saws.

It is known that, to saw unfinished sheet metal products use is made of sawing machines with special steel blades which, when sliding over the metal surface, cut into the material removing the chips and thus allow to obtain the desired cut. Such blades can be of different shapes, for example typically circular saw blades or band saw blades, after which are named the respective sawing machines, namely the circular saw and the band saw.

In particular, the band saws comprise a sawing unit consisting of a pair of wheels, housed into a suitable frame, around which winds a special steel band having a suitable saw-toothed profile, moved by rotation of one of said wheels. The plane over which the band extends is normally vertical or oblique (about 45°). In small-size band saws, the sawing unit is mounted cantilevered, rotatable about the axis of one of the two wheels and, at the start, the cutting line forms a certain angle with the horizontal plane; after the piece to be sawn has been carried under the blade, the aforedescribed sawing unit rotates about its fulcrum up to placing itself in a horizontal position and thereby cutting the whole piece. In larger-sized band saws, both wheels are mounted at the same height and the sawing unit is vertically slidable along special supporting and guiding columns. The cutting line is always horizontal and it shifts verticalwise to allow the sawing operation.

Among the vertically slidable band saws there can be machines of different sizes, to answer the most varied requirements according to the products having to be machined. Nevertheless, also in the band saws of smaller size, and thus of less weight and bulk, the sawing operation has up-to-date always been performed by carrying the piece to be sawn next to the machine, which remains instead fixed to the ground in correspondence of special masonry structures apt to guarantee its steadiness. Due to this fact, it has always been indispensable to set up in workshops where such machining operations take place, a system to handle the pieces being sawn, starting from the unfinished products, usually consisting of bars of different sections having to be collected from the warehouse and carried to the site of the sawing machine, and ending up with the cut products which have to be collected, rearranged and carried to specific sites where they undergo further machining or packaging operations.

Evidently, this handling of unfinished and cut products will be easily dealt with and will create no problems in a workshop of small dimensions and for small-size pieces, whereas it will have to be carefully planned and will create considerable drawbacks in workshops meant for volume production, where even unfinished products of considerable size and weight are machined, as in a large sawing plant or in steelworks.

Up-to-date, in large sawing plants, where the production is high and the pieces to be sawn are of medium-small dimensions (cutting sections from 10 cm² to 2500 cm²), semiautomatic transport systems have been adopted, making use of conveyor belts and trolleys, which however give rise to some inconveniences. To start with, the shifting of unfinished and cut products inevitably takes up a large area of the workshop, hence drastically reducing the possibility to optimize the spaces. Furthermore, all the flows of incoming and outgoing products concentrate on the site of the sawing machine. A first drawback thus lies in the fact that the feeding of the different types of unfinished products has to take place in cycles and the transport system has to be rearranged, time after time, for the specific product being sawn; at the same time, a second drawback arises at the outlet of the sawing machine, where the gathering point of the cut products has to be fully cleared up before being able to proceed to a new machining operation. All this introduces dead times when having to rearrange the whole sawing plant according to the type of cut product one wishes to obtain; this leads to a considerable limitation in planning the flows and does not allow, in the end, to take advantage of the production rate of the sawing machine.

The object of the present invention is to therefore realize an efficient and highly productive sawing plant, wherein the system to move the unfinished and cut products, in respect of the sawing machine, is optimized so as to eliminate the dead times between two successive machining operations and allow a free programming (i.e. not tied to machining times) of the feeding of unfinished products to the sawing machine and of the removal of cut products from said machine.

Said object is reached by means of a plant to saw unfinished sheet metal products, which comprises at least one sawing machine movable along a guide track, and a plurality of transport lines consisting of feeding lines, to feed the products to be sawn, and of corresponding removing lines to remove the sawn products, said transport lines being positioned beside the guide track, or preferably perpendicular thereto, and ending next to said track.

Further characteristics and advantages of the sawing plant according to the present invention will anyhow be more evident from the following detailed description of a preferred embodiment thereof, given by way of example and illustrated on the accompanying drawings, in which:
Fig. 1 is a plan view of the sawing plant according to the present invention; and
Fig. 2 is an elevation view of the sawing machine and of a line of roller conveyors.

As said, with the sawing plant of the present invention it is possible to obtain a high production rate and versatility of the sawing machine and, at the same time, an extreme elasticity in prearranging the handling of incoming and outgoing products, by mounting a sawing machine 1 movable along a track formed by two rails 2, instead of fixed to the ground. This allows to rapidly shift the sawing machine between a plurality of predetermined machining positions, to which the pieces to be sawn are conveyed and from which they are subsequently removed by stationary transport systems, such as conveyor belts, roller conveyors, or simple containers.

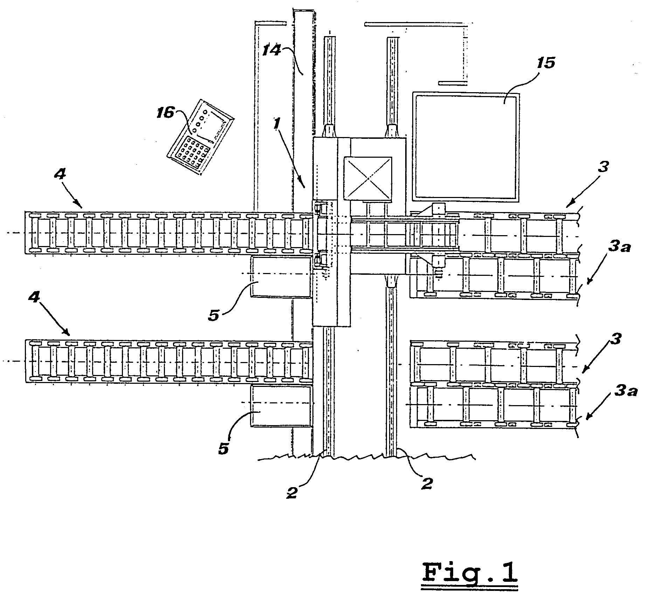

As shown in fig. 1, the sawing machine 1 slides along rails 2 positioned between feeding lines 3 and removing lines 4, perpendicular to said rails 2. While the sawing machine 1 is engaged in the sawing operation onto a pair of corresponding lines 3 and 4, the other lines can be freely used to prearrange the next feeding of unfinished products, or to remove the products which have already been sawn. One of the advantages of this arrangement hence lies in the possibility to eliminate the dead times which, in prior art, were required to rearrange or clear away the transport lines to and from the sawing machine - and during which said machine was not working - thereby achieving one of the objects of the present invention.

Further advantages derive moreover from the positioning of the rails and of the feeding and removing lines, which can be optimized to allow saving space and speeding up the overall machining times, and to allow furthermore a considerable diversification of use.

The feeding lines 3 and removing lines 4 are normally formed by roller conveyors. This type of conveyor is particularly suited when the products being handled are heavy and bulky; it is hence positively suited to feed and remove unfinished products such as steel bars. It can instead at times be inadequate for the transport of cut products, when these consist of small pieces such as sheets cut from bars of reduced size. For this reason, in a preferred embodiment of the present invention, to the side of the removing lines 4 in the form of roller conveyors, there are alternately positioned containers or trolleys 5, into which are collected small-size cut products fed from feeding lines 3a, specifically meant for this type of product and each positioned to the side of a feeding line 3. Between the feeding lines 3, or between pairs of feeding lines 3, 3a, as well as between the corresponding removing lines 4, or trolleys 5, there are provided passageways for the operators.

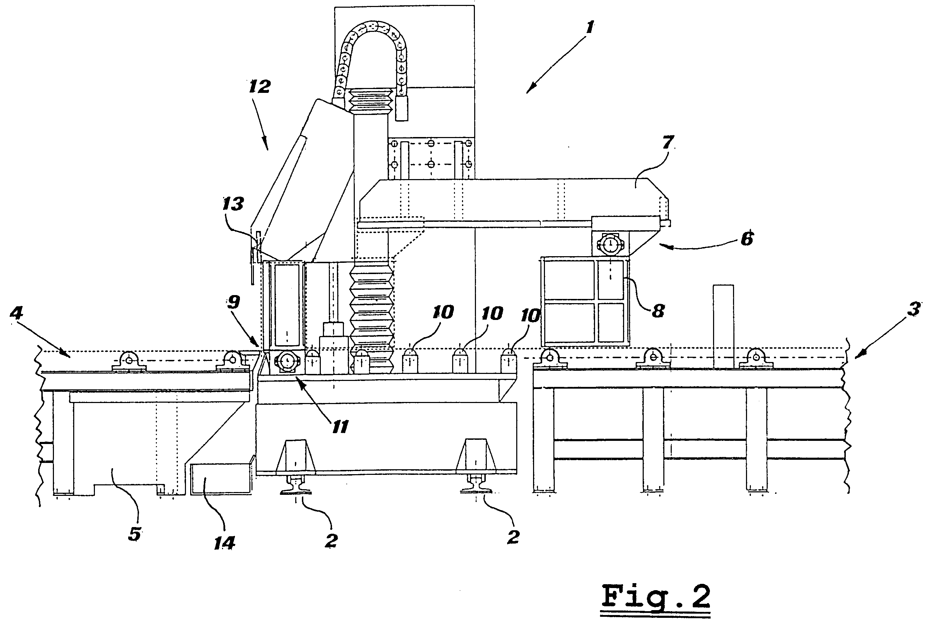

The working of the sawing plant according to the present invention will now be described in detail with reference to fig. 2.

An unfinished product to be sawn reaches the sawing machine 1 along the feeding lines 3 onto which it has been loaded by conventional means, as for example a bridge crane. A first vice 6, slidably mounted onto a bracket 7 fixed to the sawing machine 1, seizes the product by means of two opposite jaws 8. The vice 6, sliding along the bracket 7, moves the product close to a cutting zone 9 by causing it to slide on horizontal rollers 10 rotatably mounted on the sawing machine 1. At this stage, the product is blocked in the wanted position by a second vice 11 and the actual sawing operation can take place.

A sawing head 12 supports a blade 13 and is vertically slidable by way of a column system, for instance of the wormscrew or ballscrew type. While the product is approaching the cutting zone 9, the sawing head 12 is in a lifted position (as shown in fig. 2); once the piece to be sawn has been blocked in said cutting zone 9 by the jaws of the vice 11, the sawing head 12 moves down until the blade 13 is in contact with said piece, thereby giving start to the sawing operation.

According to the position taken up by the sawing machine 1 - i.e. depending on the selected feeding line - the cut product either drops into the trolley 5, or rests onto the removing line 4 and is then carried away. The filings and chips produced during the sawing operation drop into a channel 14, lying under the cutting zone 9 and extending all along the rails 2, and are periodically removed.

In some cases, to obtain a regular cut, the unfinished product should be held not only by the second vice 11 but also, at least to a short extent, by the jaws 8 of the vice 6. It is hence evident that, at the end of the sawing operation, there will be a final portion of said product which cannot be used for cutting. Said portion, considered a scrap, will have to be removed from the line 4; for this purpose, the sawing machine 1 moves along the rails 2 up to reaching a preset offset position where, adjacent to the rails 2, there is located a scrap container 15 into which said scrap portions are collected.

All the aforedescribed operations are preferably computer aided to control the movements of the sawing head 12, of the vices 6 and 11, and of the whole sawing machine 1 along the rails 2. The operator can also perform manual operations on the sawing plant, by acting on a remote control board 16 (fig. 1) suitably positioned in respect of the whole plant.

It is anyhow understood that the invention is not limited to the particular embodiments described heretofore, which merely represent non-limiting examples of its scope, but that many variants can be introduced, all within reach of an expert of the art, without thereby departing from the scope of the invention itself.

For example, two or more sawing machines can be slidably mounted along the same rails, and they can work in parallel using the same system of transport lines. Evidently, in this case, the feeding lines which are not engaged in the transport of bars, are available to preset a new working cycle, thereby allowing to make an optimal use of the whole plant.

## Claims

1. Plant to saw unfinished sheet metal products, characterized in that it comprises at least one sawing machine (1), movable along a guide track (2), and a plurality of transport lines consisting of feeding lines (3), to feed the products to be sawn, and of corresponding removing lines (4) to remove the sawn products, said transport lines being positioned beside the guide track (2) and ending next to said track.

2. Sawing plant as in claim 1), wherein said feeding lines (3) and said removing lines (4) run parallel to each other; and they are perpendicular to said track (2).

3. Sawing plant as in claim 1), wherein said sawing machine (1) is of the type with band saw blade.

4. Sawing plant as in claim 1), wherein said transport lines (3, 4) are formed by roller conveyors.

5. Sawing plant as in claim 1), wherein said removing lines (4) are formed by containers or trolleys (5).

6. Sawing plant as in claim 1), wherein said feeding lines (3) and said removing lines (4) are positioned opposite, in pairs.

7. Sawing plant as in any one of the previous claims, wherein said feeding lines (3) are all positioned on one side of said track (2), while said removing lines (4) are all positioned on the other side thereof.

8. Sawing plant as in claim 7), wherein said feeding lines (3), as well as said removing lines (4), are parted one from the other by passageways.

9. Sawing plant as in claim 8), wherein said feeding lines (3), as well as said removing lines (4), are positioned side-by-side in pairs, each pair being parted by a passageway from the adjacent pair.

10. Sawing plant as in claim 9), wherein said removing lines (4) are formed, for each pair of side-by-side lines, by a roller conveyor and by a container or trolley (5).

11. Sawing plant as in any one of the previous claims, comprising moreover a single container (15) for collecting the scrap, positioned adjacent to said track (2), in an offset position.

12. Sawing plant as in any one of the previous claims, wherein the sawing machine (1) comprises at least a first vice (6-8) which seizes and carries the unfinished products from the feeding line (3) to the cutting zone (9), and at least a second vice (11) which blocks said products while sawing takes place.

13. Sawing plant as in any one of the previous claims, wherein the movements of the sawing machine (1), of the sawing unit (12-13), of the first vice (6-8) and of the second vice (11), are automatically controlled, in a coordinate manner, by a computer.

14. Sawing plant as in any one of the previous claims, comprising furthermore a continuous channel (14), to collect the filings and chips, positioned parallel to said track (2) under the cutting zone (9) of the sawing machine (1).
